**Europäisches Patentamt**

**European Patent Office**

**Office européen des brevets**

(19)

(11) Veröffentlichungsnummer : **0 113 335
B1**

(12) **EUROPÄISCHE PATENTSCHRIFT**

(45) Veröffentlichungstag der Patentschrift :
09.09.87

(21) Anmeldenummer : 84100031.8

(22) Anmeldetag : 03.01.84

(51) Int. Cl.⁴ : **B 62 D 33/06**, A 01 D 45/00

(54) Motorfahrzeug mit lageveränderbarer Fahrerkabine.

(30) Priorität : 04.01.83 DE 8300070 U

(43) Veröffentlichungstag der Anmeldung :
11.07.84 Patentblatt 84/28

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
WO-A-82 /037 45
DE-A- 3 024 651
FR-A- 2 020 061
FR-A- 2 076 943
FR-A- 2 340 850
FR-A- 2 446 056
US-A- 3 410 356
US-A- 4 261 163

(73) Patentinhaber : Obermaier, Karl-Heinz
Karolinenstrasse 102
D-6711 Heuchelheim (DE)

(72) Erfinder : Obermaier, Karl-Heinz
Karolinenstrasse 102
D-6711 Heuchelheim (DE)

(74) Vertreter : Patentanwälte Zellentin
Zweibrückenstrasse 15
D-8000 München 2 (DE)

**Beschreibung**

Die Erfindung betrifft ein Motorfahrzeug, insbesondere für die Landwirtschaft, zum Schleppen, Schieben und/oder Tragen von Ernte- und Fördergeräten, mit einer auf Schienen verfahrbaren Fahrerkabine, wobei die Schienen auf einem aus zwei parallel zur Längsachse des Motorfahrzeugs verlaufenden Traversen bestehenden Rahmen angeordnet sind, wobei die Fahrerkabine mit einem Laufgestell verbunden ist.

Ein derartiges Motorfahrzeug ist aus der FR-A-2 340 850 bekannt. Bei dem bekannten Motorfahrzeug kann die Fahrerkabine von einem Ende des Fahrzeugs zum anderen verschoben werden, um die jeweils an diesem Ende angeordneten Zusatzgeräte besser bedienen zu können bzw. das Fahrzeug insgesamt zu verfahren ohne daß es gewendet werden muß. Durch diese Anordnung der Fahrerkabine wird dem Bedienungspersonal ein besserer Überblick bei Vor- und Rückwärtsfahrten ohne Drehen des Fahrzeugs als auch über die an dem entsprechenden Ende montierten Geräte ermöglicht, wodurch auch die Bedienung der Geräte effektiver erfolgen kann. Dennoch bleibt auch bei diesem Motorfahrzeug der Überblick begrenzt, insbesondere dann, wenn sperrige und weitausladende Zusatzgeräte verwendet werden.

Aus der FR-A-2 020 061 ist insbesondere aus Fig. 3 ein Universalfahrzeug bekannt, das an einem Ende eine mittels eines Gelenkparallelogramms höhenverschwenkbare Fahrerkabine aufweist. Hierdurch ist es möglich, bei Prozesionsladevorgängen jeweils auf der richtigen Höhe zu sein. Der Blick auf das Ende des Fahrzeugs und evtl. dort angebrachte Arbeitsorgane kann mit diesem Fahrzeug nicht verbessert werden.

Aufgabe der Erfindung ist es, ein Motorfahrzeug der eingangs genannten Art dahingehend zu verbessern, daß es möglich ist, verschiedene Zusatzgeräte an beliebigen Enden oder Seiten des Fahrzeugs zu montieren und dennoch an jeder Anordnungsstelle die Bedienung der jeweiligen Zusatzgeräte sowie das Fahren des Fahrzeugs mit optimalem Überblick über die Arbeitsvorgänge durchzuführen.

Diese Aufgabe wird durch ein Motorfahrzeug mit den Merkmalen des Anspruchs 1 gelöst.

Vorteilhafte Ausgestaltungen der Erfindung sind in den unteransprüchen angegeben.

Durch das erfindungsgemäße Motorfahrzeug ist es möglich, die Fahrerkabine an praktisch jeder beliebigen stelle des Fahrzeugs anzuordnen, so daß eine optimale Anpassung an die jeweiligen Sicht- und Arbeitsverhältnisse möglich ist. Nachfolgend wird die Erfindung anhand von Ausführungsbeispielen unter Bezug auf Zeichnungen näher erläutert. Es zeigen :

Figur 1 eine Seitenansicht eines erfindungsgemäßen Motorfahrzeugs,

Figur 2 eine Rückenansicht des Motorfahrzeugs gemäß 1,

Figur 3 eine Seitenansicht eines weiteren Ausführungsbeispiels des erfindungsgemäßen Motorfahrzeugs,

Figur 4 eine Draufsicht auf das Motorfahrzeug gemäß Fig. 3,

Figur 5 ein zweites Ausführungsbeispiel eines Motorfahrzeugs mit Feldhächsler und Gebläse in schematischer Darstellung,

Figur 6 eine Seitenansicht eines Motorfahrzeugs mit Erntegerät, Steigband sowie einem das Erntegut aufnehmenden Transportfahrzeug.

Figur 7 die schematische Seitenansicht der Lagerung des Erntegerätes ;

Figur 8 die schematische Vorderansicht des Erntegerätes mit der mit Radius um das Gelenk 22 gebogenen Schiene 23 ;

Figur 9 eine Draufsicht auf das erfindungsgemäße Motorfahrzeug mit ortsfest montierter Kabine, Erntegerät, Steigband und Ableger in Ruhe bzw. Transportstellung ;

Figur 10 eine schematische Draufsicht auf das erfindungsgemäße Motorfahrzeug mit ortsfest montierter Kabine, Erntegerät, Steigband und einem um 180° gedrehten Ableger sowie eine schematische Draufsicht auf ein Transportfahrzeug ;

Figur 11 eine schematische Draufsicht auf das erfindungsgemäße Motorfahrzeug mit fest installierter Fahrerkabine, Erntegerät, Steigband und einem Ableger, der um 270° gedreht ist.

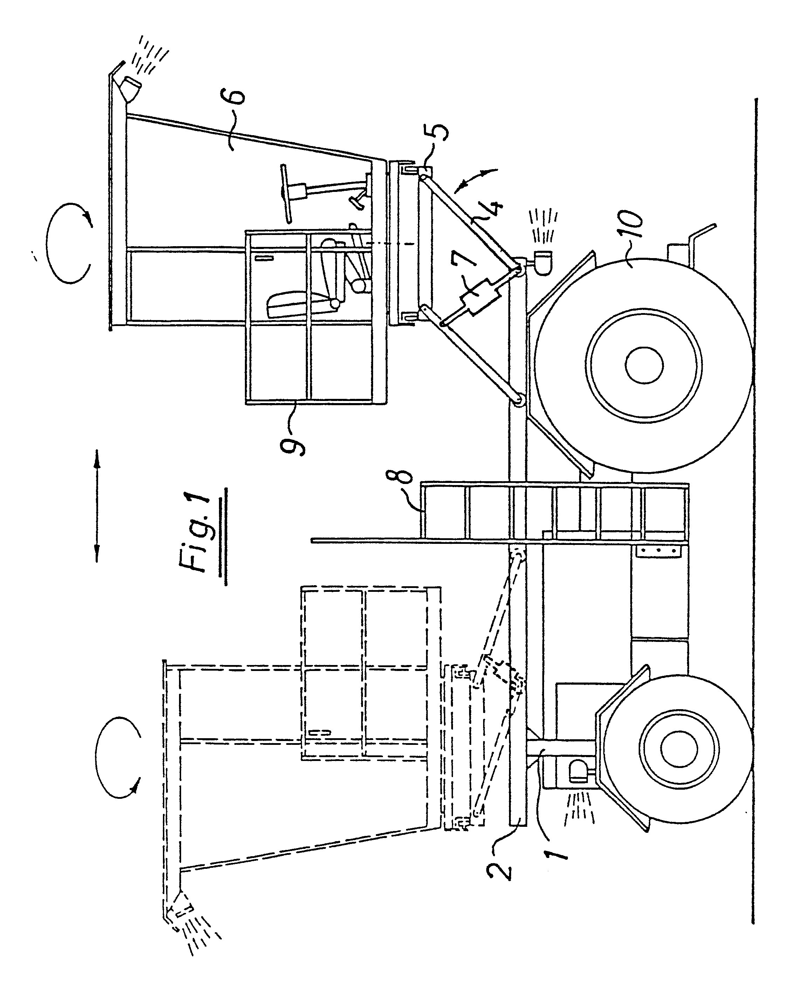

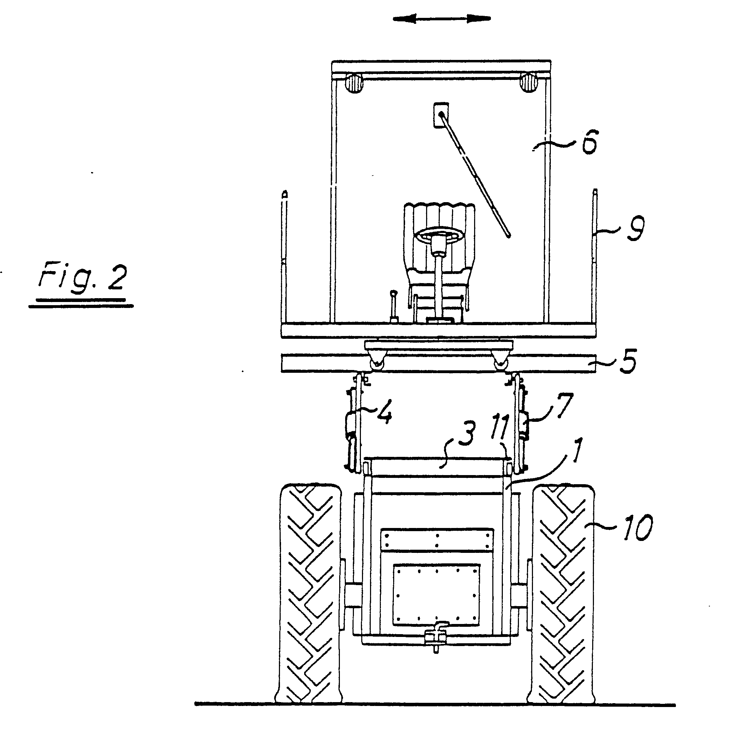

Das Motorfahrzeug gemäß den Figuren 1 und 2 weist einen aus Traversen 2 und Querstreben 3 bestehenden Rahmen auf, de von Stützen 1 gehalten wird, die jeweils im Bereich über den Achsen angeordnet sind. Vorzugsweise sind die Stützen 1 im Bereich der Vorderachsen am Motorblock und im Bereich der Hinterachsen am Getriebeblock an den Achstrichtern angeordnet.

Die Traversen 2 weisen Schienen 11 mit einem U-profil auf. In diesen Schienen 11 ist mittels Rollen ein Parallelogramm 4 gelagert, das über die ganze Länge der Traversen 2 verfahrbar ist. Das Parallelogramm 4 weist einen Hydraulikzylinder 7 auf, der die Höhenverstellbarkeit der Fahrerkabine 6 gewährleistet. Dem oberen Bereich des Parallelogramms 4 ist ein Laufgestell 5 zugeordnet.

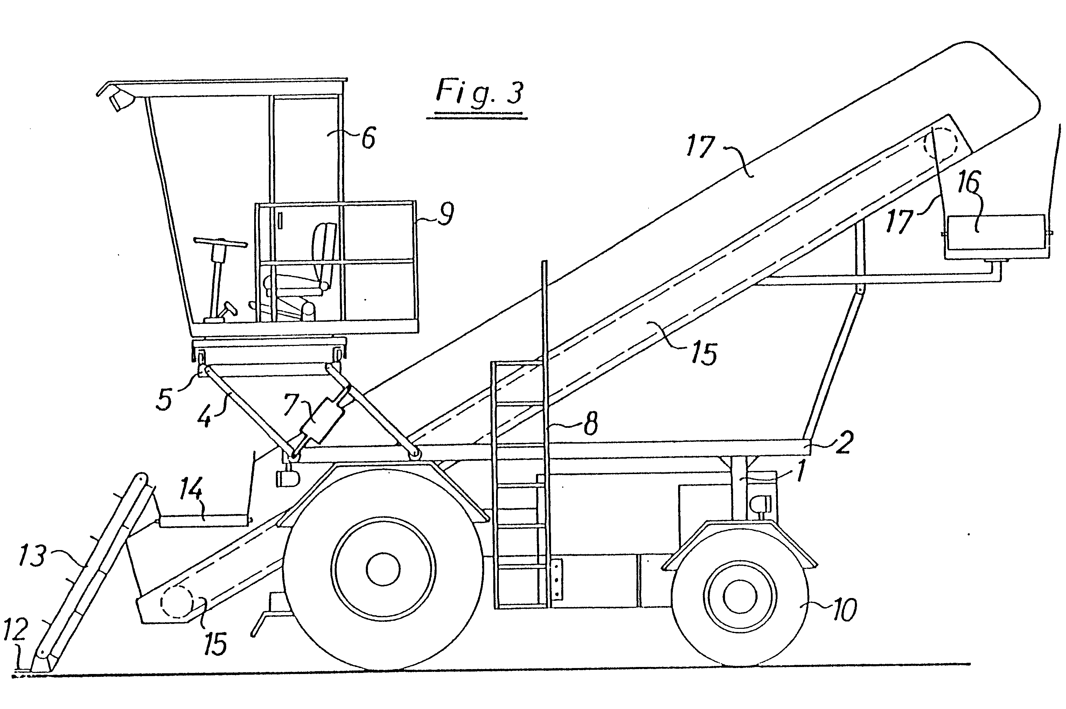

In der Ausführungsform der Fig. 2 dient das Laufgestell 5 der seitlichen Verfahrbarkeit der Fahrerkabine 6. In der Fig. 1 und der Fig. 3 ist das Laufgestell 5 als Drehteller ausgebildet, was es ermöglicht, die Frontsichtseite der Fahrerkabine 6 in beliebige Richtung zu schwenken. Das Parallelogramm 4 ist mit Hilfe der Hydraulik 7 verstellbar. Das Laufgestell 5 kann gemäß der Fig. 2 mit einem zusätzlichen Drehteller versehen sein ; auf diese Weise ist die Fahrerkabine 6 seitlich verschiebbar und um die eigene Achse drehbar. Die Drehbarkeit der Fahrerkabine 6 dient dazu, dem Fahrer eine bessere Beobachtung unmittelbar über dem Arbeitsvorgang der an das Motorfahrzeug angebauten Systeme zu ermöglichen, und zwar unabhängig von der Fahrtrichtung. Die seitliche Verschiebbarkeit der Fahrerkabine 6 ist für die Montage von solchen Aufsattelgeräten erforderlich, die auf den aus Traverse 2 und Querstrebe 3 bestehenden Rahmen aufgelegt werden.

Zum leichteren Zugang zur Fahrerkabine 6 weist das Motorfahrzeug eine seitlich zwischen den Achsen angeordnete Leiter 8 auf. Die Zugänglichkeit zur Fahrerkabine 6 wird auf beiden Seiten durch eine begehbare Plattform verbessert, die jeweils von einem Geländer 9 begrenzt wird.

Trotz der Lageveränderbarkeit der Fahrerkabine 6 sind die in ihr angeordneten Bedienungselemente so ausgelegt, daß vom Fahrersitz aus sämtliche steuerbaren Teile des Motorfahrzeuges betätigt werden können.

Um eine maximale Funktionsfähigkeit der auf den Traversen 2 bzw. den Querstreben 3 angeordneten Einrichtungen zu gewährleisten, ist es notwendig, zwischen den Rädern 10 bzw. deren Schutzblechen und den Traversen 2 einen Abstand zu belassen.

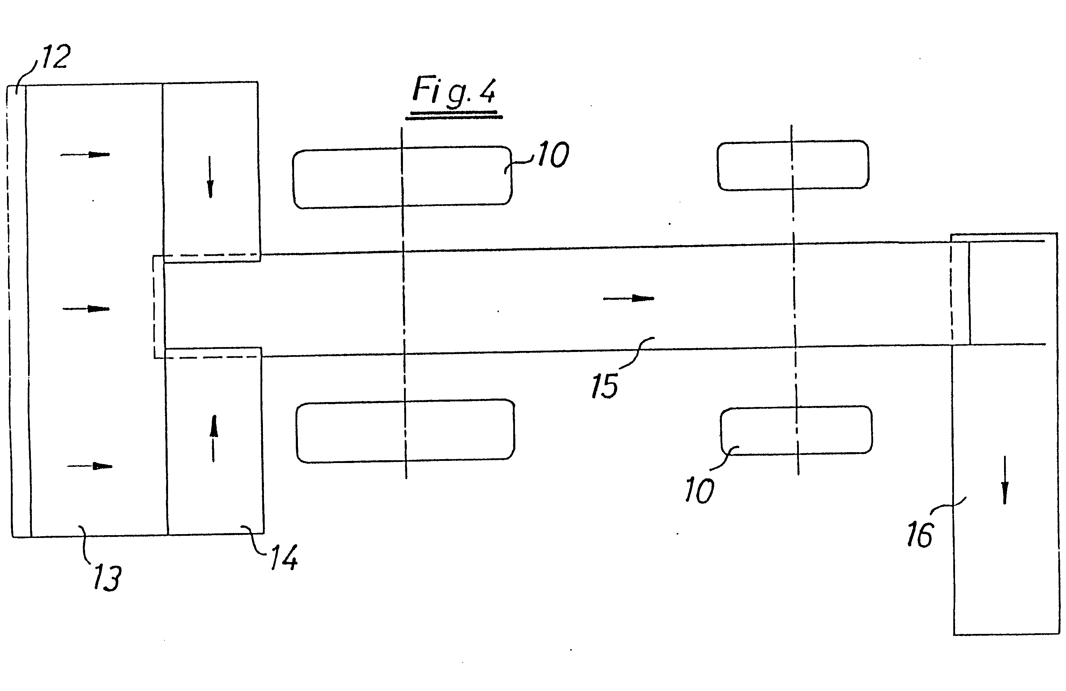

Fig. 3 zeigt das Motorfahrzeug mit einer Spinaterntemaschine als Aufbaugerät, wobei mit diesem Gerät auch anderes Grüngut geerntet werden kann. Heckseitig ist ein Mähteil mit einem Schneidwerkzeug 12, einem Schrapper 13 und zwei Querbändern 14 vorgesehen, deren Endrollen sich senkrecht über dem untersten Bereich eines Förderbandes 15 befinden. Alle Bänder weisen als seitliche Führung Aufstellbleche 17 auf. Senkrecht unter der Endrolle des Förderbandes 15 ist ein Wurfband 16 angeordnet, das in seitlicher Richtung die Abmessungen des Motorfahrzeuges erheblich überragt. Das Förderband 15 liegt heckseitig zwischen den Rädern 10 auf dem Getriebeblock auf. Frontseitig wird es auf dem aus den Traversen 2 und den Querstreben 3 bestehenden Rahmen abgestützt. Die Arbeitsfolge des mit einer Spinatmaschine ausgerüsteten Motorfahrzeuges ist schematisch in der Fig. 4 dargestellt und läuft wie folgt ab :

Die Spinatblätter werden von den Schneidewerkzeugen 12 geschnitten und vom Schrapper 13 aufgenommen und auf das Querband 14 befördert, das sie auf das Förderband 15 abwirft. Von dort gelangen sie über das Wurfband 16 auf ein Begleitfahrzeug. Das Wurfband 16 kann drehbar gelagert sein und kann auch auf direkt angehängte Hänger fördern. Während des Transportvorganges verhindern die Aufstellbleche 17 ein seitliches Abwerfen der Pflanzen.

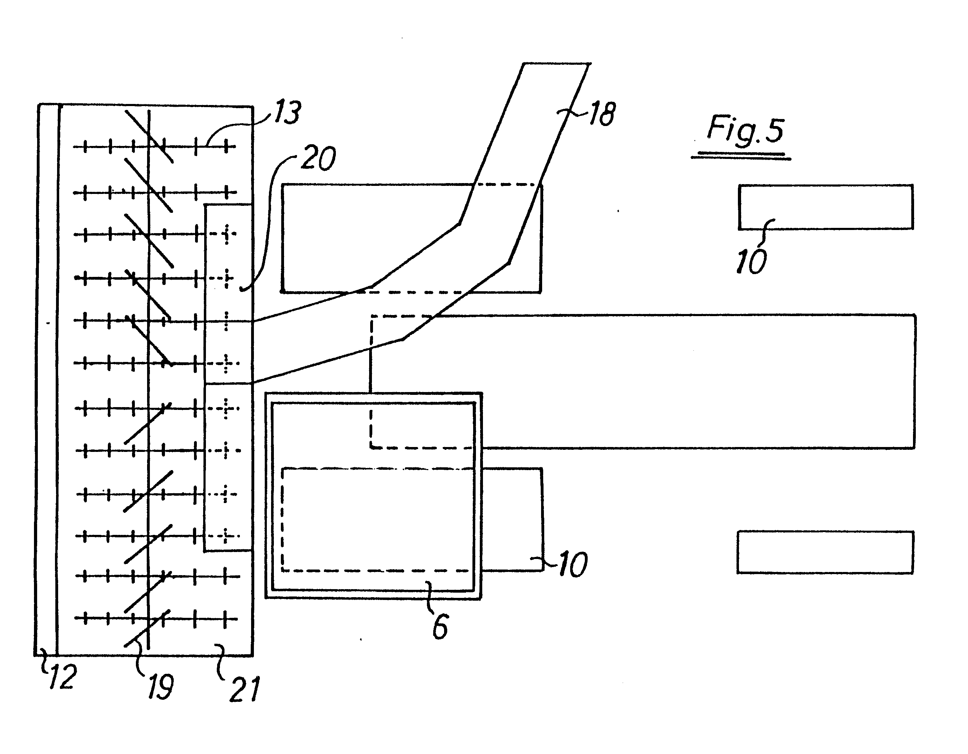

Fig. 5 zeigt in schematischer Draufsicht eine weitere Verwendungsmöglichkeit des erfindungsgemäßen Motorfahrzeuges mit einer heckseitig montierten, kombinierten Mäh- und Gebläsevorrichtung, beispielsweise einen Feldhäcksler. Denkbar ist nach kleineren Veränderungen der Einsatz dieses Aufbaugeräts als Schneefräse. Der Arbeitseinsatz des Motorfahrzeuges erfolgt dabei in umgekehrter Fahrtrichtung. Das als Mähgerät 21 ausgebildete Heckgerät besteht im wesentlichen aus den Schneidwerkzeugen 12, den Schrappern 13, einer Förderschnecke 19, einem Ansaugstutzen 20 und einem Gebläse 18. Ansaugseitig ist das Gebläse 18 in etwa mittig im Bereich zwischen den Rädern 10 der Hinterachse gelagert.

Erfindungsgemäß ist dazu die Fahrerkabine 6 seitlich verschiebbar, sie nimmt dabei eine Position über einem der Räder 10 der Hinterachse ein. Ähnlich wie beim Aufbaugerät gemäß Fig. 3 und 4 kann die Fahrerkabine 6 während der Arbeitsvorgänge jederzeit in die position gebracht werden, die für die Beobachtung des Materialflusses an den Anbaugeräten, insbesondere am Schneidwerk 12, am vorteilhaftesten ist.

Dieses Aufbaugerät arbeitet wie folgt :

Das von den Schneidwerkzeugen 12 geschnittene Pflanzenmaterial wird von den Schrappern 13 auf die Höhe der Förderschnecke 19 gefördert, die es zur Mitte in den Ansaugbereich des Ansaugstutzens 20 bewegt. Hier wird es vom Gebläse 18 angesaugt und auf ein Begleitfahrzeug geblasen.

Als ein besonderer Vorteil des erfindungsgemäßen Motorfahrzeuges erweist es sich, daß die Heck- und Aufsattelgeräte aufgrund der Lageveränderbarkeit der Fahrerkabine 6 mittig angeordnet werden können. Daraus resultiert, daß beispielsweise die Schneidefläche des Erntegerätes breiter ausgelegt werden kann als bisher nach dem Stand der Technik möglich. Das führt einerseits zu größerer Effektivität der aufmontierbaren Anbausysteme, insbesondere der Erntegeräte, und andererseits zu einer besseren Hangsicherheit.

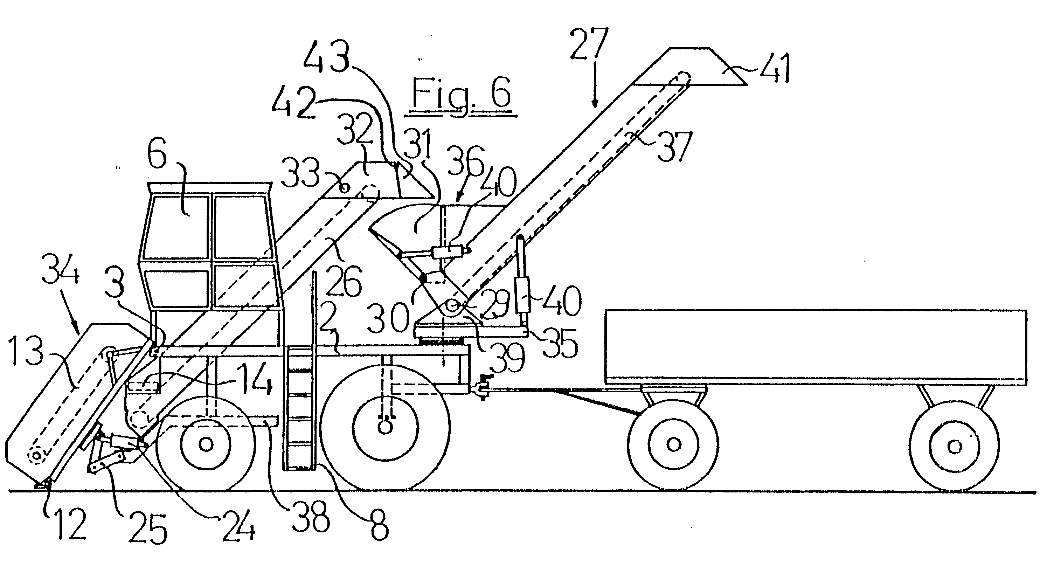

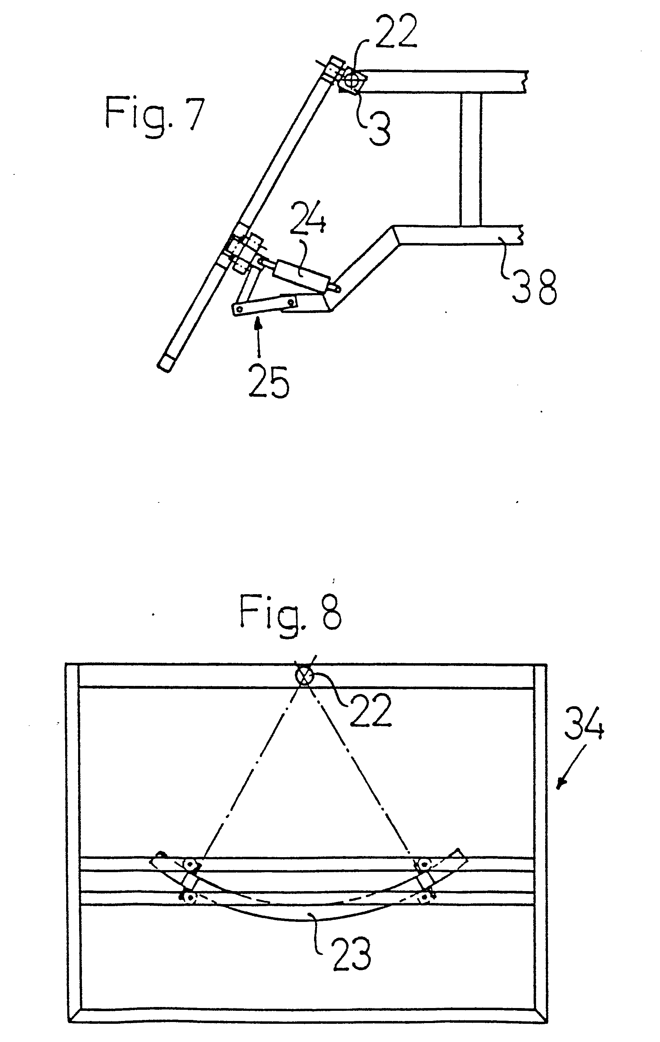

Die Figuren 6-11 zeigen eine andere konstruktive Lösung, bei der die Fahrerkabine 6 ortsfest montiert ist, aber die Vorteile eines als Tragrahmen ausgestalteten Rahmens ausgenutzt werden. Bei der bevorzugten Ausführungsform dieser Konstruktionsvariante ist ein mit Schneidwerkzeugen 12 und Schrappern 13 versehenes und die Fahrerkabine 6 untergreifendes Erntegerät 34, ein das Erntegut aufnehmendes Steigband 26 und heckseitig ein dreh- und schwenkbarer Ableger 27 vorgesehen. Das Erntegerät 34 ist oberseitig im Frontbereich im wesentlichen mittig an der drehbaren Querstrebe 3 angeordnet ; unterseitig ist es mit Hilfe mindestens eines Gelenkes 25 an einer Stütze 38 abgestützt, die im Frontbereich des Rahmens seitlich herabezogen ist. Über zumindest einen Teleskopzylinder 24 kann das Erntegerät höhenverschwenkt werden. Die oberseitige Aufhängung des Erntegerätes 34 erfolgt über ein Gelenk 22, das etwa mittig an der Querstrebe 3 angeordnet ist, wobei die frontseitige Querstrebe 3 drehbar ausgebildet sein kann. Dem Gelenk 22 ist eine radial um dieses Gelenk 22 gebogene Schiene 23 zugeordnet, auf der das Erntegerät 34 seitlich verschwenkbar gelagert ist. Die Schiene 23 wird mit Hilfe mindestens eines Gelenkes 25 an der herabgezogenen Stütze 38 abgestützt und kann über mindestens einen Teleskopzylinder 24 höhenverschwenkt werden (Fig. 7, 8).

Mittig und/oder an beiden Seiten des Erntegerätes 34 und/oder vor oder hinter den Schneidwerkzeugen 12, oder auch verteilt über die ganze Arbeitsbreite des Erntegerätes 34 in Kombination mit den Schneidwerkzeugen 12, können Sensoren für die Messung der pflanzenhöhe und/oder des Abstandes der Schneidwerkzeuge vom Boden angeordnet werden (nicht dargestellt). Bei einer Ausbildung der Sensoren als Ultraschallgerät ergibt sich der zusätzliche Vorteil, daß nicht nur die Höhe der pflanzen, sondern auch der jeweilige Abstand der Schneidwerkzeuge 12 des Erntegerätes 34 vom Boden meßtechnisch erfaßt und in ein automatisches System zur Steuerung von Höhe und seitlichem Neigungswinkel des Erntegerätes 34 eingegeben werden kann. Die Abtaster, die den Abstand der Schneidwerkzeuge 12 zum Boden und/oder der Pflanzenhöhe vornehmen, können als Geräte, die mit Ultraschall, Laserstrahlen oder mit Lichtschranken arbeiten oder auch als Näherungsschalter ausgebildet sein. Mittels solcher Sensoren bzw. Näherungsschalter wird das Erntegerät 34 in Abhängigkeit von der jeweiligen Pflanzenhöhe und/oder in Abhängigkeit der Schneidwerkzeuge 12 vom Boden geführt.

Parallel zur Längsachse des Motorfahrzeuges ist ein Steigband 26 angeordnet, das kopfseitig eine Haube 32 aufweist, die um eine Haubenachse 33 höhenverschwenkbar ist (Fig. 6). Zusätzlich ist ein Haubenblech 43 um die Achse 42 verstellbar, damit ein Verwerfen des Erntegutes ggf. noch steigbandseitig verhindert werden kann (Fig. 6).

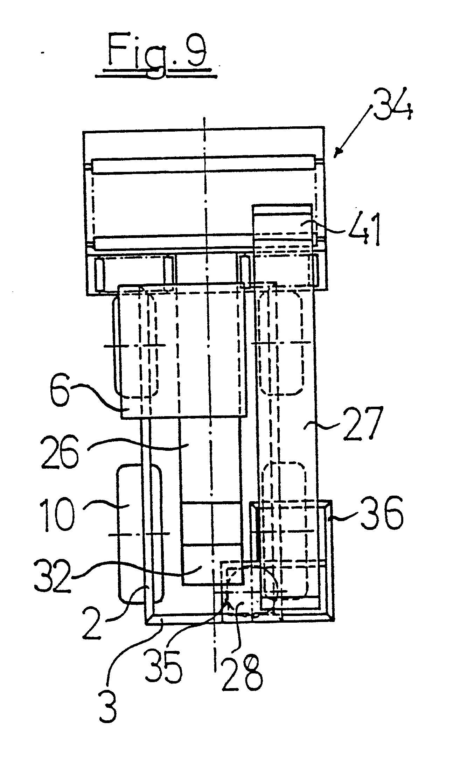

Heckseitig ist ein dreh- und schwenkbarer Ableger 27 mit Einfülltricher 36 und Förderband 37 montiert. Der Ableger 27 ruht auf einem im rückwärtigen Bereich des Rahmens 2,3 seitlich angeordnetem Drehkranz 28, auf dem eine diesen überragende Bodenplatte 35 gelagert ist. Auf letzterer ist der Ableger 27 derart exzentrisch zum Drehkranz 28 montiert, daß er in Ruhestellung parallel zur Längsachse des Motorfahrzeuges neben der Fahrerkabine 6 abgelegt werden kann (Fig. 9). Zu diesem Zweck weist die Bodenplatte 35 eine Achse 29 auf, um die der Ableger 27 neigungsverstellbar ist. Der Ableger 27 ist mit einem Einfülltrichter 36, einem Förderband 37 und kopfseitig mit einer Wurfhaube 41 versehen. Der Einfülltrichter 36 besteht aus einem ortsfesten Teil und aus einer Schwenkklappe 31, die mit Hilfe eines Teleskopzylinders 40 um die Achse 30 geschwenkt werden kann. Die Abstützung des Ablegers 27 und gleichzeitig seine Neigungsverstellbarkeit wird von einem Zylinder 40 bewirkt, der unterseitig auf der Bodenplatte 35 angeordnet ist (Fig. 6). Der Ableger 27 wird in Ruhestellung soweit heruntergefahren, daß die Rundumsicht aus der Kabine 6 vollständig erhalten bleibt.

Als vorteilhaft hat es sich erwiesen, die Fahrerkabine 6 so zu montieren, daß ihre vordere untere Kante über bzw. vor der oberen vorderen Kante des Erntegerätes 34 angeordnet ist, dadurch wird erreicht, daß der Fahrer freie Sicht auf die Arbeitsvorgänge des Erntegerätes 34 hat eventuelle Störungen und insbesondere Hindernisse vor den Schneidwerkzeugen 12 sofort bemerken kann.

Die Arbeitsweise der in den Figuren 6 bis 11 dargestellten und in den Ansprüchen 6 ff beanspruchten Ausbildungsform ist wie folgt :

Die Schneidwerkzeuge 12 des Erntegerätes 34 schneiden das zu erntende Grüngut, das vom Schrapper 13 erfaßt wird, der das Erntegut auf Querbänder 44 und dann auf das Förderband des Steigbandes 26 befördert. Bei dem Mähvorgang kann das Erntegerät 34 dank seiner erfindungsgemäßen Lagerung sowohl seitlich geschwenkt als auch mit Hilfe zumindest eines Teleskopzylinders 24 und gehaltert von mindestens einem Gelenk 25 höhenverstellt werden. Die seitliche Verschwenkbarkeit auf der Schiene 23 kann beispielsweise von einem weiteren, an der Schiene 23 angeordneten Zylinder bewirkt werden (nicht dargestellt). Diese erfindungsgemäße Lagerung des Erntegerätes 34 erweist sich dann als besonders vorteilhaft, wenn die Neigung und/oder die Höhe des Bodens unterhalb der Schneidwerkzeuge 12 des Erntegerätes 34 von der des Motorfahrzeuges differiert.

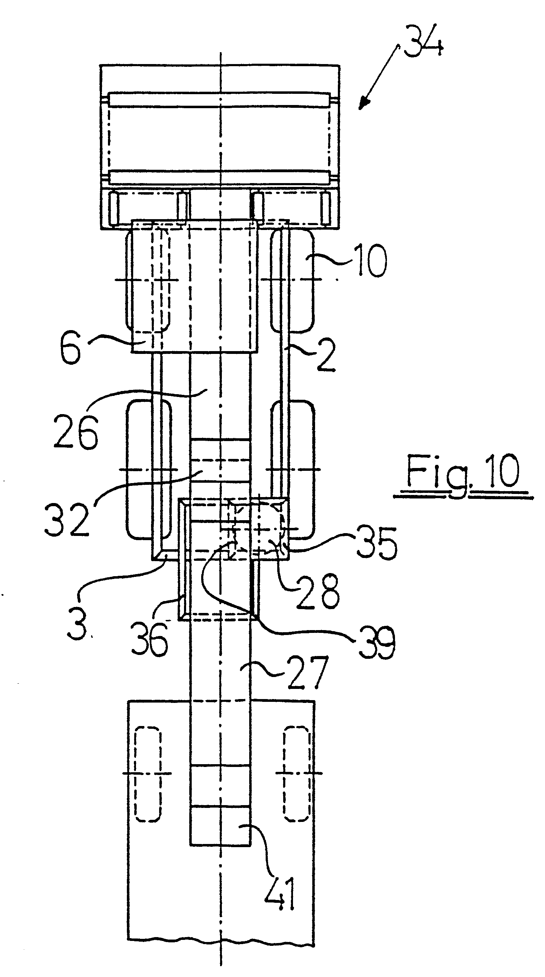

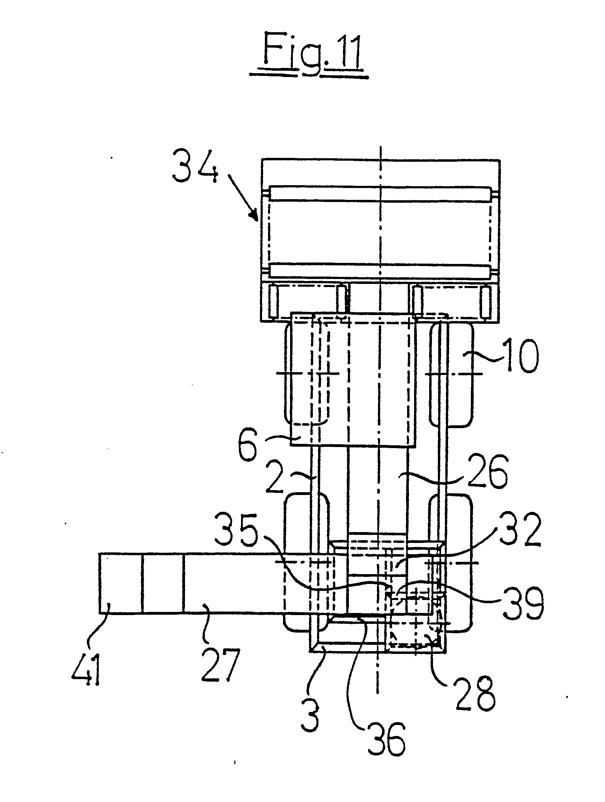

Das von den Schrappern 13 aufgenommene und auf das Förderband des Steigbandes 26 geworfene Erntegut wird in den Einfülltrichter 36 des Ablegers 27 geworfen. Dabei kann die Wurfkurve des Erntegutes mit Hilfe der Höhenverstellbarkeit der Haube 32 des Steigbandes 26 reguliert werden. Möglicherweise auftretende Verwerfungen können mit Hilfe des um die Achse 42 verstellbaren Haubenbleches 43 vermieden werden. Das wird besonders bei einer Drehung des Ablegers um 90° bzw. 270° (Fig. 11) der Fall sein, da das Erntegut in dieser Stellung des Ablegers 27 auf die Seitenwände des Einfülltrichters 36 auftrifft, die ggf. verstellbar sind (nicht dargestellt). Bei einer Drehung des Ablegers 27 um 180° wird das Erntegut auf ein heckseitig an das Motorfahrzeug angekoppeltes Transportfahrzeug befördert (Fig. 10). Diese Arbeitsweise erweist sich als besonders vorteilhaft beim Anmähen eines Schlages, weil auf diese Weise vermieden werden kann, daß noch nicht abgemähte pflanzen von einem das Erntegut aufnehmenden und transportierenden Begleitfahrzeug zerstört werden.

Nach dem Anmähen des Schlages wird der Ableger 27 weiter auf 270° geschwenkt, wodurch erreicht wird, daß das Erntegut aufnehmende Transportfahrzeug arbeitsökonomisch günstig neben dem Erntefahrzeug einherfährt.

Je nach der Höhe der Seitenwände des Transportfahrzeuges, auf das das Erntegut vom Ableger 27 geworfen wird, oder in Abhängigkeit von der jeweiligen Ladehöhe des Erntegutes auf dem Transportfahrzeug kann der Neigungswinkel des Ablegers 27 verstellt werden.

Ein besonderer Vorteil erwächst daraus, daß das Erntegut auf ein Transportfahrzeug geworfen werden kann, das hinter und nicht neben dem Mähfahrzeug fährt. Auf diese Art und Weise kann insbesondere beim Anmähen vermieden werden, daß das Tansportfahrzeug Pflanzen zerstört, die noch nicht abgemäht wurden.

Die Steuerung des Erntegerätes 34 kann auch mit Hilfe von Laserstrahlen, Lichtschranken oder Näherungsschaltern vorgenommen werden.

Weiterhin sind auf allen Seiten des erfindungsgemäßen Motorfahrzeuges zusätzliche Befestigungselemente zum Anbringen von Zusatzgeräten (nicht dargestellt) vorgesehen. Diese Befestigungselemente können Lager und hydraulisch oder auf andere Weise steuerbare Einrichtungen sein. Die Fahrerkabine 6 kann übergroß gestaltet sein, so daß sie für die Beförderung von Begleitpersonen geeignet ist.

Bei der Ausbildungsform der Ansprüche 6 ff kann ggf. das Erntegerät 34 und die Fahrerkabine 6 auch heckseitig und der Ableger 27 entsprechend frontseitig montiert werden.

Das erfindungsgemäße Motorfahrzeug kann ferner im kommunalen Einsatz Verwendung finden, beispielsweise bei der Landschaftspflege oder der Beseitigung von Schnee.

Weiterhin ist das erfindungsgemäße Motorfahrzeug auch für den Einsatz im Bausektor geeignet, beispielsweise als Vielzweckmaschine für Arbeiten auf Baustellen oder im Straßenbau.

## Patentansprüche

1. Motorfahrzeug, insbesondere für die Landwirtschaft, zum Schleppen, Schieben und/oder Tragen von Ernte- und Fördergeräten, mit einer auf Schienen (11) verfahrbaren Fahrerkabine (6), wobei die Schienen (11) auf einem aus zwei parallel zur Längsachse des Motorfahrzeugs verlaufenden Traversen (2) bestehenden Rahmen angeordnet sind, wobei die Fahrerkabine (6) mit einem Laufgestell (5) verbunden ist, dadurch gekennzeichnet, daß das Laufgestell (5) mit einem mittels eines hydraulischen zylinders (7) verstellbaren Parallelogramms (4) verbunden ist, wobei das Parallelogramm (4) über in den Schienen (11) gelagerte Rollen verfahrbar angeordnet ist.

2. Motorfahrzeug nach Anspruch 1, dadurch gekennzeichnet, daß das Laufgestell (5) eine seitliche Verfahrbarkeit der Fahrerkabine (6) gewährleistet.

3. Motorfahrzeug nach Anspruch 1, dadurch gekennzeichnet, daß das Laufgestell (5) als Drehteller ausgebildet ist.

4. Motorfahrzeug nach Anspruch 2, dadurch gekennzeichnet, daß das Laufgestell (5) zusätzlich einen Drehteller aufweist.

5. Motorfahrzeug nach einem der Ansprüche 1 bis 4, dadurch gekennzeichnet, daß sein Rahmen als Tragrahmen für Aufbau- oder Zusatzgeräte ausgelegt ist und Befestigungselemente zum Anbringen dieser Zusatzgeräte aufweist.

6. Motorfahrzeug nach den Ansprüchen 1 bis 5, dadurch gekennzeichnet, daß es ein an seinem Rahmen im Frontbereich im wesentlichen mittig angeordnetes, die Fahrerkabine (6) untergreifendes Erntegerät (34), ein das Erntegut aufnehmendes Steigband (26) und heckseitig einen dreh- und schwenkbaren Ableger (27) mit Einfülltrichter (36) und Förderband (37) aufweist.

7. Motorfahrzeug nach einem der Ansprüche 1 bis 6, dadurch gekennzeichnet, daß die frontseitige Querstrebe (3) drehbar ausgebildet ist, daß das Erntegerät (34) mit Schneidwerkzeugen (12) und Schrappern (13) versehen ist und im Frontbereich um die drehbare Querstrebe (3) höhenverschwenkbar und um ein an der drehbaren Querstrebe (3) mittig angeordnetes Gelenk (22) auf einer mit Radius um das Gelenk (22) gebogenen Schiene (23) seitlich verschwenkbar ist.

8. Motorfahrzeug nach einem der Ansprüche 1 bis 7, dadurch gekennzeichnet, daß der Rahmen im Frontbereich seitlich herabgezogene Stützen (38) aufweist, an der das Erntegerät (34) mit Hilfe mindestens eines Gelenks (2 ) abgestützt und über einen Teleskopzylinder (24) höhenverschwenkbar ausgebildet ist.

9. Motorfahrzeug nach den Ansprüchen 1 bis 8, dadurch gekennzeichnet, daß das Erntegerät (34) Sensoren oder Näherungsschalter für die Messung der Pflanzenhöhe und/oder des Abstandes der Schneidwerkzeuge (12) zum Boden aufweist.

10. Motorfahrzeug nach den Ansprüchen 1 bis 9, dadurch gekennzeichnet, daß der Rahmen im rückwärtigen Bereich einen seitlich angeordneten Drehkranz (28) aufweist, auf dem eine diesen überragende Bodenplatte (35) gelagert ist, auf der der Ableger (27) derart exzentrisch zum Drehkranz (28) montiert ist, daß er aus einer längsachsenparallelen, neben der Fahrerkabine (6) liegenden Ruhestellung um mindestens 270° drehbar ist, und daß der Einfülltrichter (36) eine Schwenkklappe (31) aufweist, wobei der Einfülltrichter (36) und die Schwenkklappe (31) in Arbeitsstellung des Ablegers (27) unterhalb einer kopfseitig am Steigband (26) angeordneten, ggf. um eine Achse (33) schwenkbar gelagerten Haube (32) liegen, die ein Haubenblech (43) aufweist, das um eine Achse (42) verstellbar ist.

11. Motorfahrzeug nach den Ansprüchen 1 bis 10, dadurch gekennzeichnet, daß die Bodenplatte (35) Konsolen (39) aufweist, in denen der Ableger (27) neigungsverstellbar gelagert ist und daß an ihr der Ableger (27) mit Hilfe von Teleskopzylindern (40) abgestützt ist, wobei der Ableger (27) eine ggf. schwenkbar gelagerte, ggf. mit einem Windschutz versehene Wurfhaube (41) aufweist.

## Claims

1. Motor vehicle, more particularly for agriculture for hauling, pushing and/or carrying harvesting and conveying apparatus, with a driver's cab (6), adapted to traverse on rails (11), said rails (11) being disposed on a frame, comprising two crossmembers (2) extending parallel with the longitudinal axis of the motor vehicle, said driver's cab (6) being connected to a running gear (5), characterised in that the running gear (5) is connected to a parallelogram (4), which is adjustable by means of a hydraulic cylinder (7), said parallelogram (4) being adapted to traverse on rollers, supported by the said rails (11).

2. Motor vehicle according to claim 1, characterised in that the running gear (5) ensures lateral traversability of the driver's cab (6).

3. Motor vehicle according to claim 1, characterised in that the running gear (5) is constructed as turntable.

4. Motor vehicle according to claim 2, characterised in that the running gear (5) is additionally provided with a turntable.

5. Motor vehicle according to any of the claims 1 to 4, characterised in that its frame is constructed as a support frame for attachment apparatus or supplementary apparatus and is provided with fastening elements for attaching such supplementary apparatus.

6. Motor vehicle according to claims 1 to 5, characterised in that on its frame, in the front region thereof, it is provided with a substantially centrally disposed harvesting apparatus (34), extending below the driver's cab (6), an elevating belt conveyor (26) adapted to take up the harvested crop and is provided on the rear with a rotatable and pivotable delivery (27) with a hopper (36) and a belt conveyor (37).

7. Motor vehicle according to any of the claims 1 to 6, characterised in that the front crossmember (3) is rotatably constructed, that the harvesting apparatus (34) is provided with cutting tools (12) and scrapers (13) and is vertically pivotable in the front region about the rotatable crossmember (3) and is laterally pivotable about a joint (22), centrally disposed on the rotatable crossmember (3), on a rail (23), curved with a radius about the joint (22).

8. Motor vehicle according to any of the claims 1 to 7, characterised in that the front region of the frame is provided with laterally downwardly extending supports (38) on which the harvesting apparatus (34) is supported by means of at least one joint (25) and is adapted to be vertically pivotable via a telescopic cylinder (24).

9. Motor vehicle according to claims 1 to 8, characterised in that the harvesting apparatus (34) is provided with sensors or proximity switches for measuring the plant height and/or the distance between the cutting tools (12) and the ground.

10. Motor vehicle according to claims 1 to 9, characterised in that the frame is provided in the rear zone with a laterally disposed slewing ring (28) on which a bottom plate (35) is supported so as to extend beyond said slewing ring and on which the delivery (27) is mounted excentrically with respect to the slewing ring (28), so that it can be rotated from an inoperative position situated on a longitudinal axial parallel adjacent to the driver's cab (6) through at least 270° and that the hopper (36) is provided with a pivoting flap (31), said hopper (36) and the pivoting flap (31) being situated below a hood (32) disposed at the top of the elevator conveyor (26) and, where appropriate, pivotable about an axis (33), when the delivery (27) is in the operative position said hood (32) having a hood plate (43) which can be adjustable about an axis (42).

11. Motor vehicle according to claims 1 to 10, characterised in that the bottom plate (35) is provided with brackets (39) in which the delivery bracket (27) is inclinably adjustably supported and that the delivery (27) bears upon said bottom plate by means of telescopic cylinders (40), the delivery (27) being provided with an ejector cowling (41) which can be pivotably supported or can be provided with a wind shield.

## Revendications

1. Véhicule à moteur en particulier pour l'agriculture, destiné à tracter pousser et/ou porter des appareils de récolte et de convoyage comportant une cabine de conduite (6) mobile sur des rails (11), ces rails (11) étant disposés sur un cadre constitué par deux traverses (2) s'étendant parallèlement à l'axe longitudinal du véhicule à moteur, la cabine de conduite (6) étant reliée à un châssis de roulement (5), caractérisé par le fait que le châssis de roulement (5) est relié à un parallélogramme (4) réglable au moyen d'un vérin hydraulique (7), le parallélogramme (4) étant monté ambulant par l'intermédiaire de galets implantés dans les rails (11).

2. Véhicule à moteur selon la revendication 1, caractérisé par le fait que le châssis de roulement (5) garantit une mobilité latérale de la cabine de conduite (6).

3. Véhicule à moteur selon la revendication 1, caractérisé par le fait que le châssis de roulement (5) est réalisé sous la forme d'un plateau tournant.

4. Véhicule à moteur selon la revendication 2, caractérisé par le fait que le châssis de roulement (5) présente, en plus, un plateau tournant.

5. Véhicule à moteur selon l'une des revendications 1 à 4, caractérisé par le fait que son cadre est conçu en tant que cadre de support pour appareils rapportés ou appareils supplémentaires, et présente des éléments de fixation pour l'installation de ces appareils supplémentaires.

6. Véhicule à moteur selon les revendications 1 à 5, caractérisé par le fait qu'il comprend une récolteuse (34) qui est disposée sensiblement au centre de la région frontale de son cadre et emprisonne par-dessous la cabine de conduite (6), une bande convoyeuse ascendante (26) recevant le produit récolté et, dans sa partie arrière, une javeleuse (27) rotative et pivotante, munie d'une trémie d'enfournement (36) et d'une bande convoyeuse (37).

7. Véhicule à moteur selon l'une des revendications 1 à 6, caractérisé par le fait que l'entretoise frontale (3) est réalisée rotative ; et par le fait que la récolteuse (34) est pourvue d'outils de coupe (12) et de racloirs (13), peut pivoter en hauteur dans la région frontale autour de l'entretoise rotative (3) et peut pivoter latéralement, autour d'une articulation (22) implantée au centre de l'entretoise rotative (3), sur un rail (23) accusant une courbure autour de l'articulation (22).

8. Véhicule à moteur selon l'une des revendications 1 à 7, caractérisé par le fait que le cadre présente, dans la région frontale, des soutiens (38) qui sont surbaissés latéralement et sur lesquels la récolteuse (34) prend appui à l'aide d'au moins une articulation (25) et est réalisée pivotante en hauteur, par l'intermédiaire d'un vérin télescopique (24).

9. Véhicule à moteur selon les revendications 1 à 8, caractérisé par le fait que la récolteuse (34) comporte des détecteurs ou des interrupteurs de proximité, pour mesurer la hauteur des plantes et/ou la distance comprise entre les outils de coupe (12) et le sol.

10. Véhicule à moteur selon les revendications 1 à 9 caractérisé par le fait que le cadre présente, dans la région postérieure, une couronne rotative (28) disposée latéralement et sur laquelle est montée une plaque de fond (35) qui fait saillie au-delà de ladite couronne, et sur laquelle la javeleuse (27) est implantée, par rapport à cette couronne rotative (28), avec une excentricité telle qu'elle puisse tourner d'au moins 270° à partir d'une position de repos parallèle à l'axe longitudinal et jouxtant la cabine de conduite (6) ; et par le fait que la trémie d'enfournement (36) possède un volet pivotant (31), la trémie d'enfournement (36) et le volet pivotant (31) se trouvant, dans la position de travail de la javeleuse (27), au-dessous d'un capot (32) qui est installé dans la région de tête de la bande convoyeuse ascendante (26), peut éventuellement pivoter autour d'un axe (33) et présente une tôle de recouvrement (43) réglable autour d'un axe (42).

11. Véhicule à moteur selon les revendications 1 à 10, caractérisé par le fait que la plaque de fond (35) comporte des consoles (39) dans lesquelles la javeleuse (27) est montée avec inclinaison réglable ; et par le fait que la javeleuse (27) prend appui sur ladite plaque à l'aide de vérins télescopiques (40), ladite javeleuse (27) présentant une hotte éjecteuse (41) éventuellement montée pivotante et éventuellement dotée d'un pare-brise.

Fig.1

*Fig. 2*

_Fig. 3_

0 113 335

_Fig. 4_

0 113 335

_Fig.5_

0 113 335

Fig. 6

Fig. 7

22

3

24

25

38

Fig. 8

22

34

23

Fig.9

Fig. 10

# Fig. 11